# EUROPEAN PATENT APPLICATION

(11) **EP 4 480 920 A1**
(43) Date of publication of application: **25.12.2024**
(21) Application number: 24182940.7
(22) Date of filing: 18.06.2024
(51) Int. Cl.: C01D 15/04, C01C 1/16, H01M 4/00

(54) **PROCESS FOR THE PRODUCTION OF BATTERY GRADE LITHIUM FLUORIDE**

(30) Priority: 19.06.2023 EP 23180181
(71) Applicant: Alkeemia S.p.A., 20121 Milano (MI) (IT)
(72) Inventor: ORSINI, Lorenzo Maria, 20121 Milano (IT); ROMIO, Matteo, 20121 Milano (IT); BITTOLO BON, Benedetta, 20121 Milano (IT); SACCO, Irene, 20121 Milano (IT); ANASTASIOU, Ioannis, 20121 Milano (IT)
(74) Representative: Gislon, Gabriele

(57) **Abstract**

The present invention relates to a process for manufacturing a highly pure, battery grade, lithium fluoride (LiH) suitable for use as starting material in the production of lithium hexafluorophosphate (LiPF₆) to be employed in the formulation of electrolytes solutions for the rechargeable electric battery market.

## Description

### FIELD OF INVENTION

The present invention relates to a process for manufacturing a lithium fluoride (LiH) suitable for use as intermediate in the production of lithium hexafluorophosphate (LiPF₆) to be employed in the formulation of electrolytes solutions for the rechargeable electric battery market. More specifically, the present invention relates to a process for the production of LiF using lithium compounds and fluorosilicic acid. The invention also relates to a method of recycling the fluorosilicic acid obtained as a by-product in industrial production processes.

### STATE OF THE ART

Lithium fluoride (LiF) is a key intermediate for the production of lithium hexafluorophosphate (LiPF₆), the most used lithium salt in the formulation of electrolytes solutions for lithium-ion batteries, which are the predominant battery type used in portable consumer electronics and electric vehicles. The LiPF₆ grade required for this specific technical application, is characterized by high purity standards (i.e., battery grade) in order not to affect the optimal battery performance. Generally, the purity grade of the components to be used in the relevant field have a purity grade > 99% and impurities in the ppm range. Therefore, For the production of such high purity material, it is mandatory, for technical and economic reasons, to work, along the production process, with high quality starting materials.

Currently, the production of LiPF₆ involves, in most of the known and utilized process, the use of hydrogen fluoride (HF) which is linked to some technical critical aspects. First of all, the hazardous chemical nature of HF has to be taken into account: HF is difficult to handle and requires specific authorizations for its use; furthermore, the HF source needs to be close to the plant, due to the difficulties related to its shipping. Secondly, it is important to consider the fact that, as previously said, when the aim of the final synthesis is the production of LiPF₆ for the battery market, also the purity of the starting HF is a significant parameter that can influence the whole process.

The most common reaction for the production of LiPF₆ is:

PF₅ + LiF → LiPF₆

where PFs is usually produced starting from PCl₃ (a) or PCl₅ (b) as follow:
(a)

   PCl₃ + Cl₂ + 5HF → PFs + 5HCl

   or
(b)

   PCl₅ + 5HF → PF₅ + 5HCl

   and LiF is usually produced using HF as follow:

(a')

   Li₂CO₃ + HF → LiF + CO₂ + H₂O

   Li₂CO₃ + CO₂ + H₂O → 2LiHCO₃

   2LiHCO₃ + 2HF → 2LiF + 2CO₂ + 2H₂O

   or
(b')

   LiOH + HF → LiF + H₂O.

Besides the above-mentioned technical difficulties, related to the extensive use of HF in the described reactions, it is also important to highlight the fact that fast growing market trends, such as the electric vehicles one, and the need for energy transition from hydrocarbon sources toward electric, can render the HF availability in Europe not sufficient to guarantee the local production and to fully support the emerging number of giga factories under constructions.

Therefore, the need for an improved process for the production of LiF, which does not imply the use of HF, is highly felt. In particular, it will be desirable to have an easy and reliable process able to produce LiF in a highly pure grade, suitable for the manufacture of LiPF₆ for electrolytes solutions of lithium-ion batteries (battery grade).

### OBJECTS OF THE INVENTION

It is an aim of the present invention to provide a new process for the production of LiF, in particular a highly pure LiF, *i.e*., purity >99% (measured by X-ray diffraction, XRD, and Inductively Coupled Plasma Optical Emission spectroscopy, ICP-OES), suitable for being used in the synthesis of LiPF₆ for battery applications (*i.e*., for the formulations of electrolytes solutions of lithium-ion batteries).

It is another object of the present invention to provide a method for recycling fluorosilicic acid (H₂SiF₆, FSA) as a by-product of hydrogen fluoride and fertilizers manufacturing process.

Those specific aims, together with other objects, will be presented in detail in the following paragraphs where the present invention is further described.

### DESCRIPTION OF THE INVENTION

The present invention relates to a process for manufacturing a highly pure, battery grade, lithium fluoride (LiH) suitable for use as starting material in the production of lithium hexafluorophosphate (LiPF₆) to be employed in the formulation of electrolytes solutions for the rechargeable electric battery market. In particular, the present application concerns an alternative synthetic process, with respect to the currently used ones, which does not employ HF as main reagent and fluorine source.

With the expressions "highly pure" and "battery grade" material, it is intended to describe a chemical compound with a purity grade above 99%, preferably above 99.5%. In a preferred embodiment, impurities are present in the ppm range, preferably below 30 ppm for each impurity, more preferably below 15 ppm for each impurity. Fluorosilicic acid (also referred to in the following text as H₂SiF₆ or FSA) is a by-product of different industries, in particular of HF manufacturing plants as well as of the production of water-soluble phosphate fertilizers. It is recovered in the form of aqueous solutions in variable concentrations, depending on the process itself, for example from 5% to 50% w/w. Due to currently in force, or under development legislations, related to the need of reducing environmental hazard and pollution, the release of FSA in the environment is not, or will not be, allowed anymore. The related industries are thus facing a change in the waste management policy, leading to a massive new availability on the market for FSA solutions which it would be beneficial to employ FSA in new processes, for examples as an alternative starting material compound. Use of FSA as a source of silica is known in the art.

The process of the present invention, for the manufacturing of battery grade LiF, involves the use of FSA solutions as alternative sources of fluorine.

The herein described alternative process have, with respect to the prior art, many advantages related, from one side, to the possibility of reducing waste and implement a circular economy process, by benefitting from a useless industrial by-process in the production of a high value component in the further production of electrolyte battery solutions. Moreover, by using FSA, it will be possible to design a manufacturing process for LiF with a significant improvement on the safety side, when compared to HF, and also to have more options of developing plants around the world, being able to more easily transport the raw material (*i.e*., the FSA). Another advantage of the production process of the present invention is the high flexibility regarding the source of LiF, by adding this new solution to the ones already presented in the prior art; furthermore, thanks to the present invention the use of a high value chemical, *i.e*., HF, may be directed to other applications and replaced by a low-cost by-product for the manufacture of a valuable final product, such as LiF in the synthesis for LiPF₆ production.

The method of recycling a H₂SiF₆ solution deriving from industrial plants according to claim 11 is another object of the present invention.

A further object of the invention is a LiF according to claim 13 or 14.

In an aspect of the present invention, the FSA solution obtained as an industrial by-product as previously specified, and preferably from HF manufacturing plants, can be directly employed in the process of the present invention without the need of further extensive purification steps reducing costs, energy consumption and waste. Moreover, the use of 30-50% w/w FSA solutions obtained by the previously described processes, can help in reducing water consumption and optimizing the process productivity.

As disclosed in the experimental part of the present application, the new manufacturing process of the invention, has the technical results of producing a highly pure LiF, by providing a competitive yield > 90%, with the desirable battery grade characteristics of purity grade > 99%, necessary for its use as a starting material in the LiPF₆ production.

The first step of the process (step i) for the preparation of lithium fluoride (LiF) of the present invention is the production of the reactive ingredient NH₄F, the fluorine source, starting from an FSA water solution, preferably a by-product solution deriving from industrial plants, more preferably from HF production plants, following the reaction:

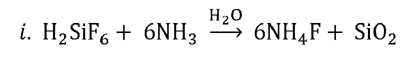

Preferably, the reaction is conducted at a temperature from 0°C to 40°C under continuous stirring. According to the present invention, the amount of the gaseous NH₃ introduced in the reaction media by a slow flux, is sufficient to reach a molar ratio FSA/NH₃ above 1/3. Preferably is in an amount sufficient to reach a molar ratio FSA/NH₃ from 1/4 to 1/8, even more preferably from 1/5 to 1/7. According to a preferred embodiment, the amount of the gaseous NH₃ is sufficient to reach a molar ratio FSA/NH₃ of 1/6.

According a preferred aspect, the gaseous NH₃ is introduced in the reaction media by a slow flux, for example during a 60 minutes period, in an amount which is sufficient to reach a final concentration of NH₄OH from 20% to 40% w/w, preferably around 30% w/w.

In a preferred aspect of the invention, the FSA component is a by-product of an industrial plant, preferably a by-product of a HF manufacturing process, constituted by a water solution with a concentration from 5% to 50% w/w, preferably from 10% to 40% w/w, more preferably from 20% to 40% w/w, even more preferably from 32% to 38% w/w.

The SiO₂ solid precipitate, obtained at the end of the reaction process, for example after from 140 minutes to 220 minutes, preferably after about 180 minutes, can be separated from the cold suspension by any means known by the expert in the field. The obtained ammonium fluoride solution (NH₄F), with a concentration from 10% to 40% w/w, preferably from 17% to 30% w/w, more preferably from 25% to 30% w/w, even more preferably around 28% w/w, is therefore used in the subsequent steps leading to the preparation of LiF in the process of the present invention.

In particular, the process for the preparation of lithium fluoride (LiF) of the present invention comprises the further following steps:
ii. preparing a solution or a suspension, *i.e*., including a slurry phase, comprising Li-X;
iii. regulating the temperature of said solution or suspension (ii) at a temperature from 0°C to 80°C;
iv. adding to said solution or suspension (iii) the solution of NH₄F obtained in step (i) under stirring, to obtain a LiF precipitate.

The component -X of step (ii) is selected from -OH and a counterion of lithium in a lithium salt, provided that said -X is not -F. Preferably said -X is selected from -OH, - CO₃, -HCO₃, -Cl, and -SO₄.

In a preferred aspect of the present invention, the Li-X solution or suspension of step (ii) is at a concentration from 5% to 30% w/w, preferably from 10% to 30% w/w.

In an aspect of the present invention, the temperature of the solution or suspension of step (ii) is kept, in step (iii), at a preferred temperature from 5°C to 35°C. In another aspect, the solution or suspension of step (ii) is heated to a temperature from 50°C to 80°C, preferably around 60°C.

In a preferred aspect of the present invention, the NH₄F solution of step (iv) is at a concentration from 10% to 40% w/w, preferably from 17% to 30% w/w, more preferably from 25% to 30% w/w, even more preferably around 28% w/w. Following the steps of the process of the present invention, it is important to remark the fact that the NH₄F solution of step (iv) is added to the solution of step (ii) and not vice-versa (i.e., the heated solution of step (ii) added to the NH₄F solution of step (iv)). In a preferred aspect, the addition is a slow addition, for example a dropwise addition. In particular the addition rate of the NH₄F solution is a rate that results in the reaction temperature to be kept at the desired value, for example equal or below 70°C, along the whole addition step. Preferably the temperature of the reaction mixture in step (iv) during the addition of NH₄F is in the range of 30°C to 80°C.

The order and the way of addition of the NH₄F component into the reaction mixture as recited in claim 1, is important to obtain a LiF having the required characteristics that make it a battery grade LiF. In particular, the claimed LiF precipitation in a reaction mixture containing a Lithium source LiX as previously described is a key aspect for the obtainment of a high purity product suitable for battery production.

As is known, metal impurities can vary according to the origin of the starting materials that originated the FSA; typically said metals are at least one of Fe, K, Na, Ca, Al, Si, Cu, Mg, Ni, Pb, Mn, V, Zn, Sr, Ti, Ba, Cd, Co, Cr, Hg. Other impurities to be taken into account, when assessing the final LiF purity grade, are ions derived from inorganic salts such as, for example, NO³⁻ and PO₄³⁻.

Accordingly with the process of the present invention, the addition of the NH₄F solution of step (iv), preferably a slow addition, is made under continuous stirring. The stirring is carried out also after the addition of the NH₄F solution of step (iv) is completed, and until the final product is fully precipitated, for example is carried out for a total time from 50 to 200 minutes, preferably from 60 to 180 minutes.

By way of example only, and without limiting the scope of the present invention, here below are exemplified five possible basic reactions (1-6), according to the present invention, with their stoichiometric balance. (1) is the first step of the process (i), used for the production of the component NH₄F, while the reactions (2-6) represent examples of the reactions of step (iv), where NH₄F previously produced is reacted with the lithium compound Li-X obtaining of LiF.

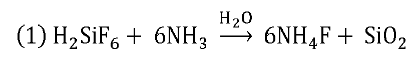

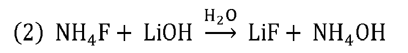

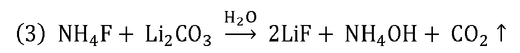

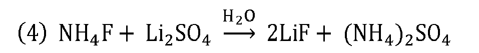

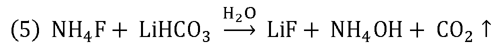

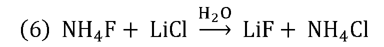

In a preferred aspect of the present invention, the process, in particular step (i), is carried out using, as H₂SiF₆ solution, a H₂SiF₆ solution obtained as a by-product of an industrial plant, preferably an industrial plant for the production of HF or of water-soluble phosphate fertilizers. The applicant realized that FSA by-product can be used, for the process of the present invention, at the concentration in which it is formed during the industrial process from which it derives, or it can be further concentrated or diluted in order to reach the desired concentration. When possible, e.g., when the by-product H₂SiF₆ solution is obtained from HF production processes, the FSA solution is used directly, without the need of any pre-purification process.

Once obtained, the precipitated LiF product can be recuperated by the reaction medium in any currently used and known method. For example, but not limited to, the solid powder can be filtered from the suspension, washed one or multiple times with distilled water, and dried in a static oven at a temperature above 100°C, for example at 110°C, until a constant weight is reached, for example for 15 hours.

With the aim of further improving the environment sustainability of the process, it is important to underline the fact that the NH₄OH produced in some of the reactions of step (iv), depending on -X nature (see, for example, reactions 2, 3 and 5 as previously reported), can be recovered and reused. In particular, NH₃ can be obtained by fluxing nitrogen into the NH₄OH solution (ammonium solution), eventually by a slight temperature increase, and reintroduced into the reaction of step (i) with FSA. Furthermore, also the SiO₂ by-product obtained in step (i) can be utilized thanks to the fact that it is obtained in purity commercial grades which are suitable for the market. A further aspect of the present invention is related to a method for recycling a solution of H₂SiF₆ obtained as by-product from industrial processes, wherein in said solution of H₂SiF₆ is fluxed gaseous NH₃ in the first step of a process according to the present invention as previously described. Said industrial processes are preferably selected from HF production and water-soluble phosphate fertilizers production. If needed or desired, one or more purification processes known by the skilled person, such as, for example but not limited to, a process selected from centrifugation, filtration, and extraction, can be performed prior to its addition to the heated solution or suspension of step (iii).

According to a preferred aspect, the method for recycling according to the present invention is related to a solution of H₂SiF₆ obtained as a by-product from an industrial process, in particular from synthesis of HF, and having a concentration from 5% to 50% by weight (w/w), preferably from 10% to 40% by weight, more preferably from 30% to 50% by weight.

In a further and preferred aspect, the by-product solution of H₂SiF₆ can be used in step (i) as previously described, without the need of an intermediate purification process. The invention will be further described in the following experimental section, with reference to the following non-limiting examples.

### EXPERIMENTAL SECTION

### EXAMPLE 1 - Preparation of NH₄F from FSA (Reaction 1, step i)

A solution of FSA produced industrially as by-product of HF manufacturing process (270 g, 0.58 mol) was stirred at 0°C while NH₃ (59 g, 3.48 mol) has been fluxed in the solution in order to form a 18% w/w solution of NH₄OH within a time of 120 minutes. According to this example the molar ratio FSA/NH₃ is 1/6,0. Temperature has been maintained below 30°C. After 240 minutes, a precipitate of silicon dioxide was formed, and it was separated from the cold suspension by vacuum filtration. The filtrate was washed twice with small portions of cold distilled water. ICP-OES (Inductively Coupled Plasma Optical Emission spectroscopy) confirmed that the quantities of Al, As, Cu, Ca, Fe, Cr, Ni, Na, Mg, Mn, K and Cd are all below 2 ppm each, Si is below 150 ppm. The procedure above described was repeated multiple times obtaining solutions of NH₄F with an average assay of 35% w/w (quantitative conversion, based on SiO₂). The solutions obtained were used for the next step of the LiF production without further purifications, selected data are reported in the following examples 1a-1d.

### EXAMPLE 1a - Preparation of LiF from LiOH solution (Reaction 2)

LiOH monohydrate tech. grade (51 g, 1.2 mol) was dissolved in 455 g of distilled water under continuous magnetic stirring. The obtained solution was heated at 60°C. A NH₄F solution obtained following the procedure described in Example 1 (160.2 g, 1.2 mol, 28% w/w) was added dropwise within 60 minutes. After 120 minutes, a precipitate of LiF was completely formed, and it was filtered from the warm suspension. The filtrate was washed twice with small portions of distilled water. The obtained product was dried for 15 hours at 110°C to give a white fine-powdered solid lithium fluoride (30.5 g, 1.17 mmol) with a 98% yield. XRD (X-ray diffraction) and ICP-OES (Inductively Coupled Plasma Optical Emission spectroscopy) confirmed the purity of LiF for a battery application (i.e., >99%); the quantity of Al, As, Cu, Fe, Cr, Ni, Mn, K and Cd are all below 15 ppm each. Ion chromatography showed amounts of NO₃⁻ and PO₄³⁻ below 5 ppm each.

### EXAMPLE 1b - Preparation of LiF from LiOH slurry (Reaction 2)

LiOH monohydrate tech. grade (45 g, 1.06 mol) was suspended in 104 g of distilled water under continuous magnetic stirring forming a slurry which was then heated at 33°C. A NH₄F solution obtained following the procedure described in Example 1 (140.6 g, 1.06 mol, 28%w/w) was added dropwise within 30 minutes. After 60 minutes, a precipitate of LiF was completely formed, and it was filtered from the suspension. The filtrate was washed twice with small portions of distilled water. The obtained product was dried for 15 hours at 110°C to give a white fine-powdered solid lithium fluoride (25 g, 960 mmol) with a 95% yield. XRD (X-ray diffraction) and ICP-OES (Inductively Coupled Plasma Optical Emission spectroscopy) confirmed the purity of LiF for a battery application (*i.e*., >99%); the quantity of Al, As, Cu, Fe, Cr, Ni, Mn, K and Cd are all below 15 ppm each. Ion chromatography showed amounts of NO₃⁻ and PO₄³⁻ below 5 ppm each.

### EXAMPLE 1c - Preparation of LiF from Li₂CO₃ slurry (Reaction 3)

Li₂CO₃ (4.2 g, 57.6 mmol) was dissolved in 500 g of distilled water under continuous magnetic stirring. The obtained solution was then kept at 23.5°C. A NH₄F solution obtained following the procedure described in Example 1 (12 g, 12.6 mmol, 39% w/w) was added dropwise within 20 minutes. After 180 minutes, a precipitate of LiF was completely formed, and it was filtered from the suspension. The filtrate was washed twice with small portions of distilled water. The obtained product was dried for 15 hours at 110°C to give a white fine-powdered solid lithium fluoride (2 g, 77 mmol) with a 67% yield. XRD (X-ray diffraction) and ICP-OES (Inductively Coupled Plasma Optical Emission spectroscopy) confirmed the purity of LiF for a battery application (*i.e*., >99%); the quantity of Al, As, Cu, Fe, Cr, Ni, Mn, K and Cd are all below 15 ppm each. Ion chromatography showed amounts of NO₃⁻ below 2 ppm and PO₄³⁻ below 10 ppm.

### EXAMPLE 1d- Preparation of LiF from Li₂CO₃ slurry (Reaction 3)

Li₂CO₃ (14.95 g, 0.202 mol) was dissolved in 110 g of distilled water under continuous magnetic stirring. The obtained solution was then kept at 40°C. A NH₄F solution obtained following the procedure described in Example 1 (37.49 g, 0.405 mol, 40% w/w) was added dropwise within 15 minutes. After 120 minutes, a precipitate of LiF was completely formed, and it was filtered from the suspension. The filtrate was washed twice with small portions of distilled water. The obtained product was dried for 15 hours at 110°C to give a white fine-powdered solid lithium fluoride (9,17 g, 0,353 mol) with a 87% yield. XRD (X-ray diffraction) and ICP-OES (Inductively Coupled Plasma Optical Emission spectroscopy) confirmed the purity of LiF for a battery application (*i.e.*, >99%); the quantity of Al, As, Cu, Fe, Cr, Ni, Mn, K and Cd are all below 15 ppm each. Ion chromatography showed amounts of NO₃⁻ and PO₄³⁻ below 5 ppm.

### EXAMPLE 2 - Preparation of NH₄F from FSA (Reaction 1, step i)

A solution of FSA produced industrially as by-product of HF manufacturing process (163.8 g, 0.457 mol) was stirred at 0°C while NH₃ (31.4 g, 1.845 mol) has been fluxed in the solution in order to form a 17% w/w solution of NH₄OH within a time of 120 minutes. According to this example the molar ratio FSA/NH₃ is 1/4,0. Temperature has been maintained below 30°C. After 240 minutes, a precipitate of silicon dioxide was formed, and it was separated from the cold suspension by vacuum filtration. The filtrate was washed twice with small portions of cold distilled water. ICP-OES (Inductively Coupled Plasma Optical Emission spectroscopy) confirmed that the quantities of Al, As, Cu, Ca, Fe, Cr, Ni, Na, Mg, Mn, K and Cd are all below 2 ppm each, Si is below 280 ppm. The procedure above described was repeated multiple times obtaining solutions of NH₄F with an average assay of 21,4% w/w (quantitative conversion, based on SiO₂). The solutions obtained were used for the next step of the LiF production without further purifications, selected data are reported in the following example 2a.

### EXAMPLE 2a - Preparation of LiF from LiCl (Reaction 6)

LiCl (10 g, 236 mmol) was dissolved in 50 g of distilled water under continuous magnetic stirring. The obtained solution was then heated at 33°C. A NH₄F solution obtained following the procedure described in Example 2 (34 g, 236 mmol, 26.2% w/w) was added dropwise within 20 minutes. After 120 minutes, a precipitate of LiF was completely formed, and it was filtered from the suspension. The filtrate was washed twice with small portions of distilled water. The obtained product was dried for 15 hours at 110°C to give a white fine-powdered solid lithium fluoride (3.5 g, 135 mmol) with a 57% yield. XRD (X-ray diffraction) and ICP-OES (Inductively Coupled Plasma Optical Emission spectroscopy) confirmed the purity of LiF for a battery application (*i.e*., >99%); the quantity of Al, As, Cu, Fe, Cr, Ni, Mn, K and Cd are all below 15 ppm each. Ion chromatography showed amounts of NO₃⁻ and PO₄³⁻ below 2 ppm.

### EXAMPLE 3 - Preparation of NH₄F from FSA (Reaction 1, step i)

A solution of FSA produced industrially as by-product of HF manufacturing process (143.9 g, 0.401 mol) was stirred at 0°C while NH₃ (54.9 g, 3.23 mol) has been fluxed in the solution in order to form a 22% w/w solution of NH₄OH within a time of 120 minutes. According to this example the molar ratio FSA/NH₃ is 1/8.1. Temperature has been maintained below 30°C. After 240 minutes, a precipitate of silicon dioxide was formed, and it was separated from the cold suspension by vacuum filtration. The filtrate was washed twice with small portions of cold distilled water. ICP-OES (Inductively Coupled Plasma Optical Emission spectroscopy) confirmed that the quantities of Al, As, Cu, Ca, Fe, Cr, Ni, Na, Mg, Mn, K and Cd are all below 2 ppm each, Si is below 280 ppm. The procedure above described was repeated multiple times obtaining solutions of NH₄F with an average assay of 17,6% w/w (quantitative conversion, based on SiO₂). The solutions obtained were used for the next step of the LiF production without further purifications, selected data are reported in the following example 3a.

### EXAMPLE 3a - Preparation of LiF from Li₂SO₄ (Reaction 4)

Li₂SO₄ monohydrate (6.2 g, 48.6 mmol) was dissolved in 50 g of distilled water under continuous magnetic stirring. The obtained solution was then cooled at 5°C. A NH₄F solution obtained following the procedure described in Example 3 (40 g, 97.2 mmol, 10% w/w) was added dropwise within 30 minutes. After 180 minutes, a precipitate of LiF was completely formed, and it was filtered from the suspension. The filtrate was washed twice with small portions of distilled water. The obtained product was dried for 15 hours at 110°C to give a white fine-powdered solid lithium fluoride (2.2 g, 84.6 mmol) with a 87% yield. XRD (X-ray diffraction) and ICP-OES (Inductively Coupled Plasma Optical Emission spectroscopy) confirmed the purity of LiF for a battery application (*i.e*., >99%); the quantity of Al, As, Cu, Fe, Cr, Ni, Mn, K and Cd are all below 15 ppm each. Ion chromatography showed amounts of NO₃⁻ and PO₄³⁻ below 3 ppm.

### EXAMPLE 4 - Preparation of NH₄F from FSA (Reaction 1, step i) - comparative example

A solution of FSA produced industrially as by-product of HF manufacturing process (447 g, 1.11 mol) was stirred at 0°C while NH₃ has been fluxed in the solution in order to form a 13,7% w/w solution (379 g, 3.24 mol) within a time of 60 minutes. According to this example the molar ratio FSA/NH₃ is 1/2.9. Temperature has been maintained below 40°C. After 180 minutes, a precipitate of silicon dioxide was formed, and it was separated from the cold suspension by vacuum filtration. The filtrate was washed twice with small portions of cold distilled water. The obtained NH₄F solution was characterized by means of ICP-OES (Inductively Coupled Plasma Optical Emission spectroscopy) and showed an average assay of 28% w/w (95% conversion, based on SiO₂). The quantity of Al, As, Cu, Ca, Fe, Cr, Ni, Na, Mg, Mn, K and Cd are all below 10 ppm each, Si is below 10000 ppm. It was used for the next steps without further purifications.

### EXAMPLE 4a - Preparation of LiF from Li₂CO₃ slurry (Reaction 3)

Li₂CO₃ (20 g, 0.27 mol) was dissolved in 160 g of distilled water under continuous magnetic stirring. The obtained solution was then kept at 23.5°C. A NH₄F solution obtained following the procedure described in Example 4a (70 g, 0.54 mol) was added dropwise within 20 minutes. After 180 minutes, a precipitate of LiF was completely formed, and it was filtered from the suspension. The filtrate was washed twice with small portions of distilled water. The obtained product was dried for 15 hours at 110°C to give a white fine-powdered solid lithium fluoride (13,5 g, 0.52 mol) with a 96% yield. The powder was characterized by means of XRD (X-ray diffraction) and ICP-OES (Inductively Coupled Plasma Optical Emission spectroscopy); the quantity of Al, As, Cu, Fe, Cr, Ni, Mn, K and Cd are all below 50 ppm each, Si is below 50000 ppm. The purity was confirmed to be not suitable for a battery application (*i.e*., >99%).

## Claims

1. A process for the preparation of lithium fluoride (LiF) comprising the following steps:
i. flux NH₃ in a water solution of H₂SiF₆, wherein the molar ratio H₂SiF₆/NH₃ is above 1/3, obtaining, after filtration, a NH₄F clear solution;
ii. preparing a solution or a suspension comprising Li-X, where -X is selected from -OH and a counterion of lithium in a lithium salt, provided that -X is not F;
iii. regulating the temperature of said solution or suspension (ii) at a temperature from 0°C to 80°C;
iv. adding to said solution or suspension (iii) the solution of NH₄F of step (i) under stirring, to obtain a LiF precipitate.

2. The process according to claim 1, **characterized in that** said H₂SiF₆ solution of step (i) is at a concentration from 5% to 50% w/w, preferably from 10% to 40% w/w, more preferably from 20% to 40% w/w, even more preferably from 32% to 38% w/w.

3. The process according to claim 1 or 2, **characterized in that** the amount of NH₃ to be fluxed in the H₂SiF₆ solution in step (i) is sufficient to reach a final concentration of NH₄OH from 20% to 40% w/w, preferably around 30% w/w.

4. The process according to any one of the preceding claims, **characterized in that** the molar ratio H₂SiF₆/NH₃ of step (i) is in the range of 1/4 to 1/8, preferably in the range of 1/5 to 1/7, more preferably is 1/6.

5. The process according to any one of the preceding claims, **characterized in that** said step (i) is conducted at a temperature from 0°C to 40°C.

6. The process according to any one of the preceding claims, **characterized in that** said -X in step (ii) is selected from -OH, -CO₃, -HCO₃, -Cl and -SO₄.

7. The process according to any one of the preceding claims, **characterized in that** said Li-X solution or suspension of step (ii) is at a concentration from 5% to 30% w/w, preferably from 10% to 30% w/w.

8. The process according to any one of the preceding claims, **characterized in that** said NH₄F solution of step (iv) is added to the solution or suspension (iii) at a rate such that the temperature of said solution or suspension is equal or below 80°C, preferably in the range of 30°C to 80°C.

9. The process according to any one of the preceding claims, **characterized in that** said stirring of step (iv) is carried out for a time from 50 to 200 minutes, preferably from 60 to 180 minutes.

10. The process according to any one of the preceding claims, **characterized in that** said H₂SiF₆ solution of step (i) is a by-product of an industrial plant, preferably an industrial plant for the production of HF or of water-soluble phosphate fertilizers.

11. A method for recycling a solution of H₂SiF₆ obtained as by-product from an industrial production process, preferably said process being selected from HF production and water-soluble phosphate fertilizers production, wherein in said H₂SiF₆ solution is fluxed gaseous NH₃ in the step (i) in a process according to any one of claims 1 to 10.

12. The recycling method according to claim 11, wherein said by-product H₂SiF₆ solution is at a concentration from 5% to 50% w/w, preferably from 10% to 40% w/w, more preferably from 20% to 40% w/w, even more preferably from 32% to 38% w/w.

13. LiF obtained by the process according with any one of claims 1 to 10, **characterized by** a purity grade above 99%, preferably above 99,5%.

14. LiF according to claim 13, **characterized by** a content of Al, As, Cu, Fe, Cr, Ni, Mn, K and Cd equal or below 30 ppm each and the amount of each of NO₃⁻ and PO₄³⁻ is below 15 ppm.
